(19) Europäisches Patentamt
European Patent Office
Office européen des brevets

(11) **EP 2 673 888 B1**

(12) # FASCICULE DE BREVET EUROPEEN

(45) Date de publication et mention de la délivrance du brevet:
**08.04.2015 Bulletin 2015/15**

(21) Numéro de dépôt: **12704866.8**

(22) Date de dépôt: **13.01.2012**

(51) Int Cl.:
***H04B 1/44*** *(2006.01)*   ***H04B 7/04*** *(2006.01)*

(86) Numéro de dépôt international:
**PCT/FR2012/050086**

(87) Numéro de publication internationale:
**WO 2012/107656 (16.08.2012 Gazette 2012/33)**

(54) **TERMINAL BI-BANDE A ACCES CONCURRENTS OPERANT DANS DEUX BANDES ADJACENTES**

IN ZWEI BENACHBARTEN BÄNDERN BETRIEBENES DOPPELBAND-ENDGERÄT MIT GLEICHZEITIGEM ZUGRIFF

CONCURRENT-ACCESS DUAL-BAND TERMINAL OPERATING IN TWO ADJACENT BANDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.02.2011 FR 1151063**

(43) Date de publication de la demande:
**18.12.2013 Bulletin 2013/51**

(73) Titulaire: **Thomson Licensing**
**92443 Issy-les-Moulineaux (FR)**

(72) Inventeurs:
• **LE NAOUR, Jean-Yves**
**F-92443 Issy-les-Moulineaux (FR)**
• **ROBERT, Jean-Luc**
**F-92443 Issy Les Moulineaux Cedex (FR)**
• **LO HINE TONG, Dominique**
**F-92443 Issy Les Moulineaux (FR)**
• **LOUZIR, Ali**
**F-92443 Issy Les Moulineaux (FR)**

(74) Mandataire: **Huchet, Anne et al**
**Technicolor**
**1, rue Jeanne d'Arc**
**92443 Issy-les-Moulineaux Cedex (FR)**

(56) Documents cités:
**US-A1- 2006 276 227   US-A1- 2010 166 098**

EP 2 673 888 B1

**Description**

<u>Domaine de l'invention</u>

La présente invention concerne un terminal pour la transmission haut débit de signaux vidéo, audio ou de données dans un environnement domestique. Elle s'applique plus particulièrement dans le cadre des terminaux fonctionnant selon le standard IEEE 802.11n et employant simultanément plusieurs canaux fréquentiels.

<u>Arrière-plan technologique</u>

La technologie WiFi conforme aux standards IEEE 802.11a/b/g ou 11n est actuellement la plus utilisée pour la transmission sans fil haut débit dans un environnement domestique. Le standard IEEE 802.11n apporte quelques améliorations par rapport à IEEE 802.11a/b/g. Il autorise notamment l'emploi de la technologie MIMO (pour Multiple Input Multiple Output en langue anglaise) qui est une technique multi-antennes permettant d'améliorer le débit des transmissions et leur robustesse dans un environnement, tel que l'environnement domestique, qui est dominé par les interférences.

Le standard IEEE 802.11n opère dans la bande 2,4 à 2,5 GHz et la bande 4,9 à 5,9 GHz. Ces deux bandes sont appelées dans la suite de la description bande des 2,4 GHz et bande des 5 GHz. Des terminaux opérant simultanément dans ces deux bandes existent. La demande de brevet FR 2 911 739 décrit un tel terminal. Celui-ci est apte à recevoir et/ou émettre simultanément un signal dans la bande des 2,4 GHz et un signal dans la bande 4,9 à 5,9 GHz. La bande des 5 GHz est employée pour la transmission de la vidéo et la bande des 2,4 GHz pour la transmission des données.

S'il existe des stations de base mettant en oeuvre le découpage d'une bande en sous-bandes affectées chacune à un utilisateur dans le cadre de la téléphonie mobile 3G ou 4G, comme décrit dans la demande de brevet US 2010/0166098, il n'existe actuellement aucun terminal MIMO utilisant simultanément deux canaux fréquentiels dans la bande des 5 GHz en raison de la proximité fréquentielle des canaux. D'une manière plus générale, il n'existe pas à ce jour de terminal MIMO fonctionnant dans le domaine de la Wifi apte à transmettre et/ou à recevoir simultanément des signaux contenus dans des canaux fréquentiels très proches.

<u>Résumé de l'invention</u>

Un but de la présente invention est de proposer un terminal MIMO palliant l'inconvénient précité.

A cet effet, la présente invention propose un terminal de communication sans fil apte à émettre et/ou recevoir simultanément des signaux vidéo, audio ou de données dans une bande de fréquences prédéterminée, comportant

- un dispositif MIMO apte à générer N signaux MIMO dans ladite bande de fréquence prédéterminée à partir de n signaux en bande de base ou à générer n signaux en bande de base à partir de N signaux MIMO dans ladite bande de fréquences prédéterminée, avec $N > n \geq 2$,
- M antennes pour recevoir et/ou transmettre les N signaux MIMO, avec $M \geq N/2$ ; et
- un dispositif de commutation pour connecter le dispositif MIMO aux M antennes,

caractérisé en ce que le dispositif MIMO comprend un premier circuit MIMO apte à générer, à partir d'un signal en bande de base, N1 signaux MIMO dans une première sous-bande de ladite bande de fréquence prédéterminée ou à générer, à partir de N1 signaux MIMO dans ladite première sous-bande, un signal en bande de base, et un deuxième circuit MIMO apte à générer, à partir d'un signal en bande de base, N2 signaux MIMO dans une deuxième sous-bande de ladite bande de fréquence prédéterminée ou à générer, à partir de N2 signaux MIMO dans ladite première sous-bande, un signal en bande de base, avec N1+N2=N, lesdites première et deuxième sous-bandes étant non recouvrantes, et en ce que le dispositif de commutation comporte une première et une seconde voies adaptées pour connecter lesdits premier et deuxième circuits MIMO aux antennes de manière à ce que chacune desdites M antennes soit apte à recevoir ou transmettre l'un des N1 signaux MIMO du premier circuit MIMO et à recevoir ou transmettre l'un des N2 signaux MIMO du deuxième circuit MIMO simultanément et comprend en outre un dispositif de filtrage associé à chaque antenne et connecté respectivement à la première et à la seconde voies pour isoler, le signal MIMO de la première sous-bande du signal MIMO de la deuxième sous-bande reçus ou émis tous deux par ladite antenne.

Ainsi, selon l'invention, chaque antenne du terminal est raccordée à deux circuits MIMO opérant dans des sous-bandes distinctes de la sous- bande de fréquences prédéterminée et un dispositif de filtrage est associé à chaque antenne pour isoler, le signal MIMO de la première sous-bande du signal MIMO de la deuxième sous-bande reçus ou émis par l'antenne.

Selon un mode de réalisation particulier, la bande de fréquences prédéterminée correspond à la bande WiFi 5 GHz. La première sous-bande est la bande [4,9 GHz , 5,35GHz] et la deuxième sous-bande est la bande [5,47 GHz , 5,875GHz].

En variante, la bande de fréquences prédéterminée est une bande de fréquences [790MHz-862MHz] du dividende numérique ou se trouve dans la bande UHF [470MHz-790MHz].

Selon une particularité de l'invention, les antennes sont des antennes à un seul accès et le dispositif de filtrage est un diplexeur.

Selon un mode de réalisation particulier, le dispositif de commutation est constitué de deux circuits de commutation, l'un pour les signaux MIMO de la première sous-bande et l'autre pour les signaux MIMO de la deuxième sous-bande. Le dispositif de commutation comporte alors des premier et deuxième circuits de commutation pour connecter respectivement les premier et deuxième circuits MIMO au dispositif de filtrage associé à chaque antenne.

Avantageusement, le dispositif de commutation comporte en outre un module frontal monté entre lesdits premier et deuxième circuits de commutation et le dispositif de filtrage associé à chaque antenne pour amplifier les signaux MIMO provenant des antennes et/ou les signaux MIMO provenant des premier et deuxième circuits MIMO. Chaque module frontal comprend par exemple un amplificateur à faible bruit pour amplifier les signaux MIMO à destination des premier et deuxième circuits MIMO et un amplificateur de puissance pour amplifier les signaux MIMO à destination des antennes. Ces amplificateurs ont notamment pour rôle de compenser au moins en partie les pertes de signal introduites par les dispositifs de filtrage associés aux antennes et/ou les circuits de commutation du terminal.

Avantageusement, le circuit de commutation comporte en outre N1 filtres passe-bande, montés entre le premier circuit MIMO et le premier circuit de commutation, ayant chacun une bande passante correspondant sensiblement à la première sous-bande pour filtrer les signaux MIMO à destination ou en provenance du premier circuit MIMO et/ou N2 filtres passe-bande, montés entre le deuxième circuit MIMO et le deuxième circuit de commutation, ayant une bande passante correspondant sensiblement à la deuxième sous-bande pour filtrer les signaux MIMO à destination ou en provenance du deuxième circuit MIMO.

De préférence, le dispositif de commutation comporte également des moyens d'amplification montés entre les premier et deuxième circuits MIMO et les premier et deuxième circuits de commutation pour amplifier les signaux MIMO provenant des premier et deuxième circuits MIMO et des moyens d'amplification montés entre les premier et deuxième circuits MIMO et les premier et deuxième circuits de commutation pour amplifier les signaux MIMO provenant des premier et deuxième circuits de commutation. Ces moyens d'amplification ont pour rôle de compenser au moins en partie les pertes de signal introduites par les filtres passe-bande.

Selon un mode de réalisation particulier, les antennes du terminal sont des antennes directives couvrant chacune un secteur angulaire propre. L'association de la sectorisation aux techniques MIMO procure un gain significatif en termes de couverture et de performances dans un environnement où les interférences sont nombreuses, tel que l'environnement domestique. Avantageusement, les M antennes couvrent ensemble un secteur angulaire de 360°.

Brève description des figures

L'invention sera mieux comprise, et d'autres buts, détails, caractéristiques et avantages apparaîtront plus clairement au cours de la description explicative détaillée qui va suivre, en se référant ci-dessous aux dessins annexés, lesquels représentent:

- la figure 1, le schéma fonctionnel d'un terminal conforme à l'invention ;
- la figure 2, le schéma fonctionnel détaillé d'une brique de base du terminal de la figure 1, et
- la figure 3, le schéma fonctionnel partiel d'un terminal conforme à l'invention comprenant deux circuits MIMO 2*2 fonctionnant dans deux sous-bandes distinctes d'une bande de fréquences prédéterminée.

Description détaillée d'un mode de réalisation

L'invention sera décrite dans le cadre d'un terminal d'un système de transmission sans fil MIMO opérant dans la bande WiFi des 5GHz, ledit terminal étant apte à émettre et/ou recevoir simultanément au moins 2 signaux dans cette bande.

La bande des 5 GHz comprend deux sous-bandes : une première sous-bande allant de 5,150 GHz à 5,350 GHz, appelée sous-bande basse, et une deuxième sous-bande allant de 5,470 GHz à 5,725 GHz pour l'Europe, ou allant de 5,470 GHz à 5,835 GHz pour les Etats-Unis, appelée sous-bande haute. Les deux sous-bandes basse et haute sont proches et espacées de seulement 120MHz, ce qui requiert la mise en place de moyens de filtrage radiofréquence efficaces dans les chaines d'émission et de réception du terminal. A noter que les puissances autorisées à l'émission dans la bande des 5 GHz dépendent de la sous-bande (basse ou haute) et de la région où est déployé le système de transmission. La puissance autorisée à l'émission est plus élevée aux Etats-Unis qu'en Europe pour certaines parties de la sous-bande haute et de la sous-bande basse.

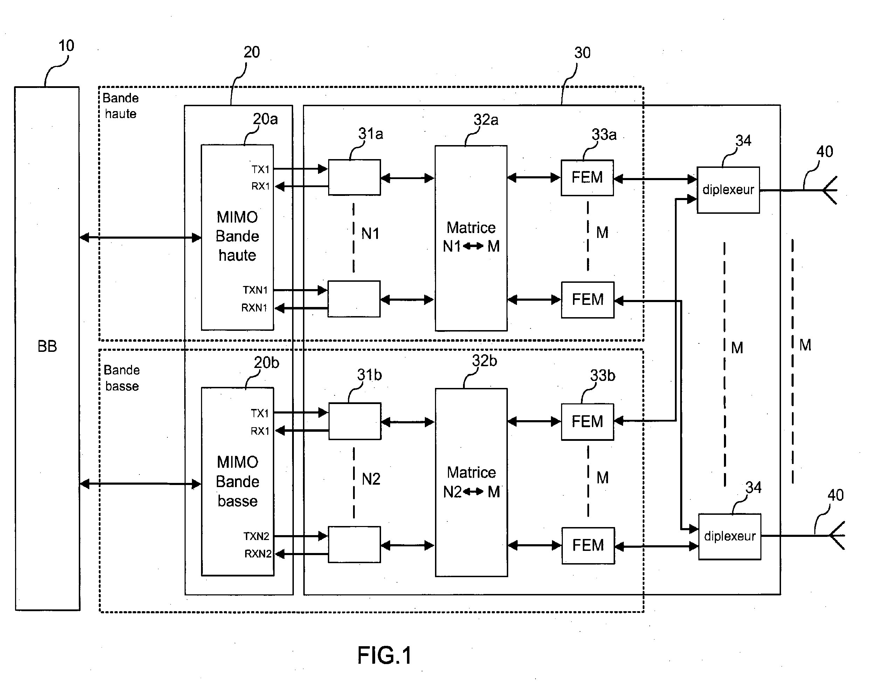

La figure 1 représente le schéma fonctionnel d'un terminal conforme à l'invention apte à émettre et/ou recevoir simultanément des signaux dans la bande des 5 GHz. Il comprend un circuit de traitement numérique en bande de base 10, un dispositif MIMO 20 pour générer des signaux MIMO dans la bande de fréquence des 5GHz à partir des signaux en bande de base délivrés par le circuit 10 ou générer des signaux en bande de base à partir de signaux MIMO dans la bande de fréquence des 5GHz, un dispositif de commutation 30 pour connecter le dispositif MIMO 20 à M antennes 40, avec M≥N où N représente le nombre de signaux MIMO.

Selon l'invention, le dispositif MIMO 20 est apte à traiter simultanément N signaux MIMO et comporte deux circuits MIMO indépendants, l'un 20a apte à générer, à partir de n signaux en bande de base, N1 signaux MIMO dans la sous-bande haute ou inversement, l'autre 20b apte à générer, à partir de signaux en bande de base, N2 signaux MIMO dans la sous-bande basse ou inversement, N étant la somme de N1 et N2 (N=N1+N2) et N>n≥2. De plus, chaque antenne 40 est apte à transmettre ou recevoir simultanément un des N1 signaux MIMO de la sous-bande haute et un des N2 signaux MIMO de la sous-bande basse.

En référence à la figure 1, le circuit MIMO 20a comporte N1 bornes d'entrée RX1 à RXN1 pour recevoir des signaux MIMO et N1 bornes de sortie TX1 à TXN1 pour émettre des signaux MIMO. De même, Le circuit MIMO 20b comporte N2 bornes d'entrée RX1 à RXN2 pour recevoir des signaux MIMO et N2 bornes de sortie TX1 à TXN2 pour émettre des signaux MIMO. Selon l'invention, le dispositif de commutation 30 est conçu pour connecter sélectivement une borne d'entrée ou de sortie du circuit MIMO 20a (sous-bande haute) et une borne d'entrée ou de sortie du circuit MIMO 20b (sous-bande basse) à chaque antenne 40.

A cet effet, le dispositif de commutation 30 comporte deux matrices de commutation, l'une 32a destinée aux signaux MIMO de la sous-bande haute et l'autre 32b destinée aux signaux MIMO de la sous-bande basse. La matrice de commutation 32a est reliée aux bornes d'entrée et sortie du circuit MIMO 20a via des sélecteurs 31a. Un sélecteur 31a est ainsi associé à chaque couple de bornes RXi TXi, i ∈[1..N1], pour relier sélectivement la borne RXi ou la borne TXi à la matrice de commutation 32a. De même, un sélecteur 31 b est associé à chaque couple de bornes RXj TXj, j ∈[1..N2], pour relier sélectivement la borne RXj ou la borne TXj à la matrice de commutation 32b.

Le dispositif de commutation comporte en outre un dispositif de filtrage 34, monté entre les matrices de commutation 32a, 32b et chacune des antennes 40, pour isoler le signal MIMO de la sous-bande haute du signal MIMO de la sous-bande basse tous les deux reçus ou émis par l'antenne associée. Dans le mode de réalisation illustré, le dispositif de filtrage 34 est un diplexeur double accès. Chaque diplexeur est connecté, via une matrice de commutation 32a ou 32b et un sélecteur 31 a ou 31 b, à une borne d'entrée ou de sortie du circuit MIMO 20a (sous-bande haute) et à une borne d'entrée ou de sortie du circuit MIMO 20b (sous-bande basse).

Avantageusement, le dispositif de commutation 30 comporte M modules frontaux 33a connectés entre la matrice de commutation 32a et l'un des accès des diplexeurs 34 et M modules frontaux 33b connectés entre la matrice de commutation 32b et l'autre accès des diplexeurs pour amplifier les signaux MIMO reçus et/ou les signaux MIMO à émettre par le terminal. Ainsi, selon l'invention, chaque diplexeur 34 est relié à un module frontal 33a et un module frontal 33b.

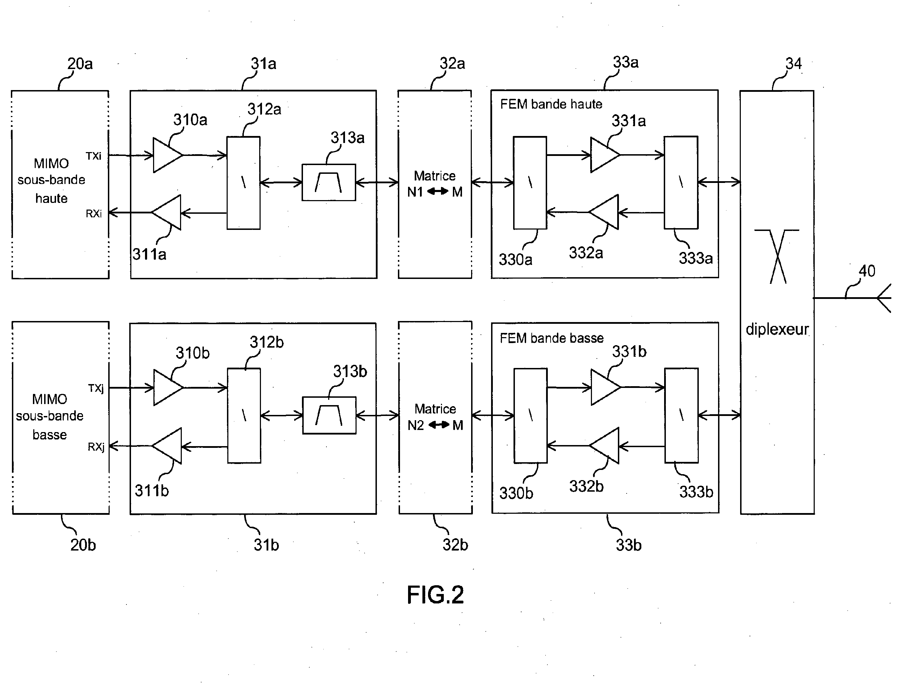

Les sélecteurs 31 a et 31 b et les modules frontaux 33a et 33b seront décrits plus en détail en référence à la figure 2 qui représente une brique de base du terminal de la figure 1. Ce dernier comprend M briques de base associées chacune à une des M antennes 40. Cette brique de base comprend tous les circuits intervenant dans le traitement des signaux MIMO reçus ou émis par l'antenne associée.

Chaque brique de base comprend donc un diplexeur connecté à l'antenne 40 de la brique de base. Le diplexeur 34 est connecté par un de ses accès au circuit MIMO 20a (sous-bande haute) via un sélecteur 31a, la matrice de commutation 32a et un module frontal 33a et par l'autre de ses accès au circuit MIMO 20b (sous-bande basse) via un sélecteur 31 b, la matrice de commutation 32b et un module frontal 33b.

Le module frontal 33a comprend un amplificateur à faible bruit 332a pour amplifier les signaux MIMO de la sous-bande haute reçus par l'antenne 40 et un amplificateur de puissance 331 a pour amplifier les signaux MIMO de la sous-bande haute à émettre. Ces amplificateurs sont raccordés, via un premier commutateur SPDT (pour Single Pole Double Throw en langue anglaise) référencé 330a, à la matrice de commutation 32a et, via un deuxième commutateur SPDT référencé 333a, à l'accès sous-bande haute du diplexeur 41.

De même, le module frontal 33b comprend un amplificateur à faible bruit 332b pour amplifier les signaux MIMO de la sous-bande basse reçus par l'antenne 40 et un amplificateur de puissance 331 b pour amplifier les signaux MIMO de la sous-bande basse à émettre. Ces amplificateurs sont raccordés, via un commutateur SPDT 330b, à la matrice de commutation 32b et, via un commutateur SPDT 333b, à l'accès sous-bande basse du diplexeur 34.

Les amplificateurs 331 a et 331 b ont pour rôle de compenser au moins en partie les pertes de signal introduites par la matrice de commutation 32a ou 32b et le commutateur 330a ou 330b. Les amplificateurs 332a et 332b ont pour rôle de compenser au moins en partie les pertes de signal introduites par le dispositif de filtrage 34 et le commutateur 333a ou 333b.

Les sous-bandes haute et basse étant relativement proches (120 MHz entre le dernier canal de la sous-bande basse et le premier canal de la sous-bande haute), les amplificateurs 331 a et 331 b sont sensiblement identiques. De même, les amplificateurs 332a et 332b sont sensiblement identiques.

Les modules frontaux sont disposés entre les circuits de commutation et les dispositifs de filtrage des antennes pour compenser les pertes introduites par ceux-ci, ce qui permet de minimiser la puissance à délivrer par les amplificateurs de puissance 331 a et 331 b et d'augmenter la sensibilité du terminal en réception. Ceci a également pour conséquence de réduire la consommation et la dissipation thermique de l'ensemble du terminal.

De l'autre coté de la matrice de commutation 32a, le sélecteur 31 a comprend un commutateur SPDT 312a pour sélectionner la borne TXi ou la borne RXi du circuit MIMO 20a et la raccorder à la matrice de commutation 32a. Le sélecteur 31 a comporte avantageusement un filtre passe-bande 313a ayant une bande passante correspondant sensiblement à la sous-bande haute. Le filtre 313a est monté entre le commutateur 312a et la matrice de commutation 32a. Le sélecteur 31 a comprend également un amplificateur de puissance 310a monté entre la borne TXi du circuit MIMO 20a et le commutateur SPDT 312a ainsi qu'un amplificateur à faible bruit 311a monté entre la borne RXi du circuit MIMO 20a et le commutateur SPDT 312a pour compenser au moins en partie les pertes de signal introduites par le filtre passe-bande 313a. Un circuit identique pour le sélecteur 31 b est prévu de l'autre côté de la matrice de commutation 32b, ce circuit comprenant un commutateur SPD 312b, un filtre passe-bande 313b et deux amplificateurs 310b et 311 b, l'ensemble étant monté comme décrit ci-dessus pour le sélecteur 31 b.

Les sous-bandes haute et basse étant relativement proches (120 MHz entre le dernier canal de la sous-bande basse et le premier canal de la sous-bande haute), le fonctionnement simultané et indépendant du terminal sur deux canaux distincts (un canal dans la sous-bande basse et un canal dans la sous-bande haute) engendre des contraintes de filtrage d'une part au niveau des filtres du diplexeur 34 et d'autre part au niveau des filtres passe-bandes 313a et 313b.

Les contraintes de filtrage au niveau du diplexeur 34 sont définies par le bruit hors canal utile généré par l'amplificateur 331a (respectivement 331 b) sur l'accès sous-bande haute (resp. sous-bande basse) du diplexeur et le seuil de réception sur l'accès sous-bande basse (resp. sous bande haute). En première approximation, si on considère que l'amplificateur 331 a est sensiblement identique à l'amplificateur 331 b et que l'amplificateur 332a est sensiblement identique à l'amplificateur 332b, l'isolation requise entre l'accès sous-bande haute et l'accès sous-bande basse du diplexeur, notée ISO_DIPL, doit être la suivante :

$$ISO\_DIPL = NF\_PA + Gain\_PA - NF\_LNA + MARGE$$

où:

- NF_PA est le facteur de bruit des amplificateurs 331 a et 331b ;
- Gain_PA est le gain des amplificateurs 331 a et 331b ;
- NF_LNA est le facteur de bruit des amplificateurs 332a et 332b ; et
- MARGE est une marge de sécurité.

Si, à titre d'exemple, on considère des amplificateurs 331a, 331b, 332a et 332b avec les caractéristiques suivantes: NF_PA=10 dB, Gain_PA= 30 dB, NF_LNA= 5dB et une marge de 5dB, l'isolation requise au niveau des deux accès du diplexeur 34 vaut 40dB.

De même, les contraintes de filtrage complémentaire au niveau des filtres 313a et 313b sont définies par le bruit hors bande utile du signal MIMO généré par le circuit MIMO 20a (ou 20b) pour l'émission et la protection nécessaire en réception du circuit MIMO 20b (ou 20a) pour ne pas dégrader les performances du terminal lors d'une émission. La réjection nécessaire est principalement déterminée par l'émission parasite hors canal utile des circuits MIMO. En première approximation cette réjection requise 'REJECTION' est définie par l'expression suivante :

$$REJECTION = NF\_MIMO - NF\_PA' + MARGE$$

où :

- NF_MIMO est le facteur de bruit apparent des circuits MIMO 20a et 20b;
- NF_PA' est le facteur de bruit des amplificateurs 310a et 310b ;
- MARGE est une marge de sécurité supplémentaire.

Si, on considère des amplificateurs 310a, 310b et des circuits MIMO 20a et 20b avec les caractéristiques suivantes : NF_MIMO=41 dB, NF_PA'= 10 dB et une marge de 5dB, la réjection requise pour les deux filtres 313a et 313b vaut 36dB

Ce terminal peut être employé avec des antennes directives couvrant chacune un secteur angulaire propre. De préférence, les M antennes couvrent ensemble un secteur angulaire complet de 360°, les secteurs angulaires des antennes étant recouvrants ou non recouvrants. Le secteur angulaire associé à chacune des antennes intervient alors dans le processus de sélection des antennes opéré par le dispositif de commutation.

Dans le cas d'une transmission de données et de signaux vidéo, la sous-bande basse est avantageusement utilisée pour la transmission des données et la sous-bande haute est utilisée pour la transmission des signaux vidéo.

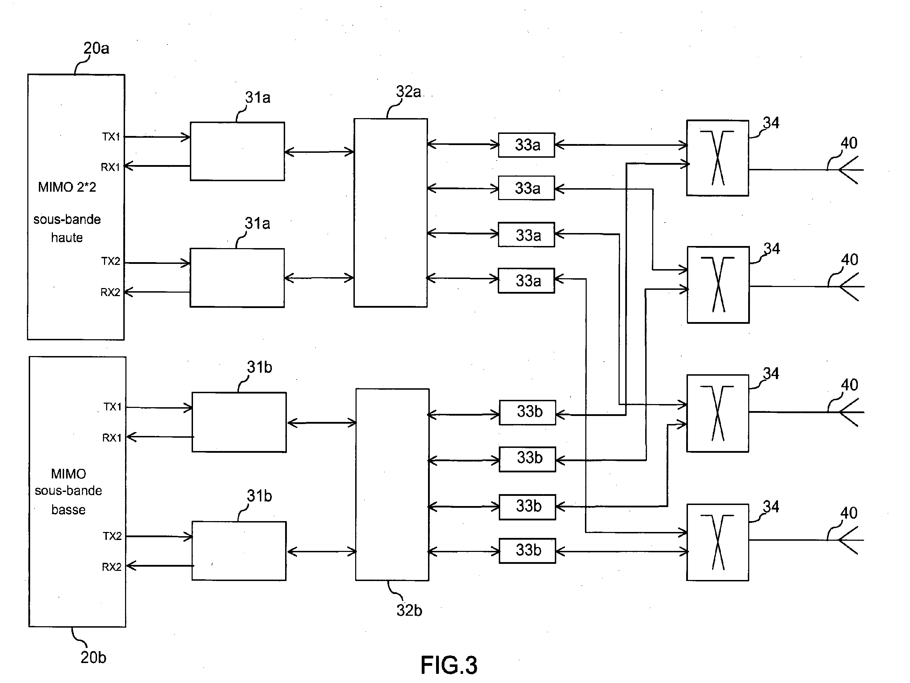

La figure 3 donne un exemple de terminal conforme à l'invention comportant deux circuits MIMO 2*2. Dans cette figure, les éléments qui sont identiques aux éléments des schémas des figures 1 et 2 portent les mêmes références. Le terminal de la figure 3 comporte deux circuits MIMO 2*2, l'un 20a opérant dans la sous-bande haute et l'autre 20b opérant dans la sous-bande basse, raccordés à 4 antennes 40, directives ou non, via un dispositif de commutation comportant deux sélecteurs 31a, deux sélecteurs 31 b, les deux matrices de commutation 32a et 32b, quatre modules frontaux 33a, quatre modules frontaux 33b et quatre diplexeurs 34. Dans cet exemple, on a donc N1=4, N2=4, N=N1+N2=8 et M=4. Chaque antenne 40 émet ou reçoit un signal MIMO dans la sous-bande haute et un signal MIMO dans la sous-bande basse.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

Dans le mode de réalisation illustré, le diplexeur est double accès et les antennes sont mono-accès. Ces dernières couvrent les deux sous-bandes basse et haute. Ce montage pourrait être remplacé par des antennes double accès ayant une très bonne isolation entre leurs accès et des filtres indépendants montés sur chacun des accès.

Dans le mode de réalisation illustré, les filtres 313a et 313b sont disposés entre les circuits MIMO et les matrices de commutation. Il pourrait être envisagé de les disposer ailleurs, par exemple entre les matrices de commutation et les commutateurs SPDT 330a, 330b.

Enfin, dans le cadre du déploiement des réseaux multimédias haut débits dans un environnement domestique, le concept particulier d'architecture de terminal utilisateur proposé ici permet d'implémenter des solutions WiFi MIMO bi-bande dans la bande convoitée des 5GHz associées ou non à des antennes directives. Ce concept permet une transmission simultanée et indépendante sur au moins deux canaux dans la bande des 5GHz. Ce concept peut être étendu dans une bande de fréquence telle que par exemple la bande UHF libérée correspondant au dividende numérique.

## Revendications

**1.** Terminal de communication sans fil apte à émettre et/ou recevoir simultanément des signaux dans une bande de fréquences prédéterminée, comportant

- un dispositif MIMO (20) apte à générer N signaux MIMO dans ladite bande de fréquence prédéterminée à partir de n signaux en bande de base ou à générer n signaux en bande de base à partir de N signaux MIMO dans ladite bande de fréquences prédéterminée, avec $N>n\geq 2$;
- M antennes (40) pour recevoir et/ou transmettre les N signaux MIMO, avec $M\geq N/2$ ; et
- un dispositif de commutation (30) pour connecter le dispositif MIMO aux M antennes,

**caractérisé en ce que** le dispositif MIMO comprend un premier circuit MIMO (20a) apte à générer, à partir d'un signal en bande de base, N1 signaux MIMO dans une première sous-bande de ladite bande de fréquence prédéterminée ou à générer, à partir de N1 signaux MIMO dans ladite première sous-bande, un signal en bande de base, et un deuxième circuit MIMO (20b) apte à générer, à partir d'un signal en bande de base, N2 signaux MIMO dans une deuxième sous-bande de ladite bande de fréquence prédéterminée ou à générer, à partir de N2 signaux MIMO dans ladite première sous-bande, un signal en bande de base, avec N1+N2=N, lesdites première et deuxième sous-bandes étant non recouvrantes, et **en ce que** le dispositif de commutation (30) comporte une première et une seconde voies adaptées pour connecter lesdits premier et deuxième circuits MIMO (20a, 20b) aux antennes (40) de manière à ce que chacune desdites M antennes soit apte à recevoir ou transmettre l'un des N1 signaux MIMO du premier circuit MIMO et à recevoir ou transmettre l'un des N2 signaux MIMO du deuxième circuit MIMO simultanément et comprend en outre un dispositif de filtrage (34) associé à chaque antenne comportant une première et une seconde voies pour isoler, le signal MIMO de la première sous-bande du signal MIMO de la deuxième sous-bande reçus ou émis tous deux par ladite antenne.

**2.** Terminal selon la revendication 1, **caractérisé en ce que** la bande de fréquences prédéterminée correspond à la bande WiFi 5 GHz.

3. Terminal selon la revendication 2, **caractérisé en ce que** la première sous-bande est la bande [4,9 GHz, 5,35GHz] et la deuxième sous-bande est la bande [5,47 GHz, 5,875GHz].

4. Terminal selon l'une quelconque des revendications précédentes, **caractérisé en ce que** les antennes (40) sont des antennes à un seul accès et le dispositif de filtrage (34) associé à chaque antenne est un diplexeur.

5. Terminal selon l'une quelconque des revendications précédentes, **caractérisé en ce que** le dispositif de commutation (30) comporte des premier et deuxième circuits de commutation (32a, 32b) pour connecter respectivement les premier et deuxième circuits MIMO (20a, 20b) au dispositif de filtrage associé à chaque antenne.

6. Terminal selon la revendication 5, **caractérisé en ce que** le dispositif de commutation (30) comporte en outre un module frontal (33a, 33b) monté entre lesdits premier et deuxième circuits de commutation et le dispositif de filtrage associé à chaque antenne pour amplifier les signaux MIMO provenant des antennes et/ou les signaux MIMO provenant des premier et deuxième circuits MIMO.

7. Terminal selon la revendications 5 ou 6, **caractérisé en ce que** le circuit de commutation (30) comporte en outre N1 filtres passe-bande (313a), montés entre le premier circuit MIMO et le premier circuit de commutation, ayant chacun une bande passante correspondant sensiblement à la première sous-bande pour filtrer les signaux MIMO à destination ou en provenance du premier circuit MIMO et/ou N2 filtres passe-bande (313b), montés entre le deuxième circuit MIMO et le deuxième circuit de commutation, ayant une bande passante correspondant sensiblement à la deuxième sous-bande pour filtrer les signaux MIMO à destination ou en provenance du deuxième circuit MIMO.

8. Terminal selon la revendication 7, **caractérisé en ce que** le dispositif de commutation (30) comporte en outre des moyens d'amplification (310a, 310b) montés entre les premier et deuxième circuits MIMO et les premier et deuxième circuits de commutation pour amplifier les signaux MIMO provenant des premier et deuxième circuits MIMO.

9. Terminal selon la revendication 7 ou 8, **caractérisé en ce que** le dispositif de commutation (30) comporte en outre des moyens d'amplification (311 a, 311b) montés entre les premier et deuxième circuits MIMO et les premier et deuxième circuits de commutation pour amplifier les signaux MIMO provenant des premier et deuxième circuits de commutation.

10. Terminal selon l'une quelconque des revendications précédentes, **caractérisé en ce que** les antennes (40) sont des antennes directives couvrant chacune un secteur angulaire propre, les M antennes couvrant ensemble de préférence un secteur angulaire de 360°.

**Patentansprüche**

1. Drahtloses Kommunikationsendgerät, das geeignet ist, Signale in einem vorbestimmten Frequenzband gleichzeitig zu senden und/oder zu empfangen, mit:

- einer MIMO-Vorrichtung (20), die geeignet ist, N MIMO-Signale in dem vorbestimmten Frequenzband aus n Basisbandsignalen zu erzeugen oder n Basisbandsignale aus N MIMO-Signalen in dem vorbestimmten Frequenzband zu erzeugen, wobei $N > n \geq 2$,
- M Antennen (40) für den Empfang und/oder die Übertragung der N MIMO-Signale, wobei $M \geq N/2$, und
- einer Schaltvorrichtung (30), um die MIMO-Vorrichtung mit den M Antennen zu verbinden,

**dadurch gekennzeichnet, dass**

die MIMO-Vorrichtung eine erste MIMO-Schaltungsanordnung (20a) aufweist, die geeignet ist, aus einem Basisbandsignal N1 MIMO-Signale in einem ersten Unterband des vorbestimmten Frequenzbandes zu erzeugen oder aus N1 MIMO-Signalen in dem ersten Unterband ein Basisbandsignal zu erzeugen, und eine zweite MIMO-Schaltungsanordnung (20b), die geeignet ist, aus einem Basisbandsignal N2 MIMO-Signale in einem zweiten Unterband des vorbestimmten Frequenzbandes zu erzeugen oder aus N2 MIMO-Signalen in dem ersten Unterband ein Basisbandsignal zu erzeugen, wobei N1 + N2 = N, wobei das erste und das zweite Unterband nicht überlappend sind, und

die Schaltvorrichtung (30) eine erste und eine zweite Gasse aufweist, die geeignet sind, die erste und die zweite MIMO-Schaltungsanordnung (20a, 20b) mit den Antennen (40) derart zu verbinden, dass jede der M Antennen geeignet ist, eines der N1 MIMO-Signale der ersten MIMO-Schaltungsanordnung zu empfangen oder zu übertragen und gleichzeitig eines der N2-MIMO-Signale der zweiten MIMO-Schaltungsanordnung (20b) zu empfangen oder zu übertragen, und ferner eine Filtriervorrichtung (34) aufweist, die jeder Antenne mit einer ersten und einer zweiten Gasse zugeordnet ist, um das MIMO-Signal des ersten Unterbandes von dem MIMO-Signal des zweiten Unterbandes zu isolieren, die beide von der Antennen empfangen oder gesendet wurden.

2. Endgerät nach Anspruch 1, **dadurch gekennzeichnet, dass** das vorbestimmte Frequenzband dem 5-GHz-WiFi-Band entspricht.

3. Endgerät nach Anspruch 2, **dadurch gekennzeichnet, dass** das erste Unterband das Band [4,9 GHz, 5,35 GHz] ist und das zweite Unterband das Band [5,47 GHz, 5,875 GHz] ist.

4. Endgerät nach einem beliebigen der vorhergehenden Ansprüche, **dadurch gekennzeichnet, dass** es sich bei den Antennen (40) um Antennen mit einem einzigen Zugang handelt und die jeder Antenne zugeordnete Filtriervorrichtung (34) ein Diplexer ist.

5. Endgerät nach einem beliebigen der vorhergehenden Ansprüche, **dadurch gekennzeichnet, dass** die Schaltvorrichtung (30) einen ersten und einen zweiten Schaltkreis (32a, 32b) aufweist, um die erste bzw. die zweite MIMO-Schaltungsanordnung (20a, 20b) mit der jeder Antenne zugeordneten Vorrichtung zu verbinden.

6. Endgerät nach Anspruch 5, **dadurch gekennzeichnet, dass** die Schaltvorrichtung (30) ferner ein Frontmodul (33a, 33b) aufweist, das zwischen dem ersten und dem zweiten Schaltkreis und der jeder Antenne zugeordneten Filtriervorrichtung geschaltet ist, um die MIMO-Signale aus den Antennen und/oder die MIMO-Signale aus der ersten und der zweiten MIMO-Schaltungsanordnung zu verstärken.

7. Endgerät nach Anspruch 5 oder 6, **dadurch gekennzeichnet, dass** der Schaltkreis (30) ferner N1 Bandpassfilter (313a) aufweist, die zwischen der ersten MIMO-Schaltungsanordnung und dem ersten Schaltkreis geschaltet sind und jeweils eine Bandbreite aufweisen, die im Wesentlichen dem ersten Unterband zur Filtrierung der MIMO-Signale zu oder aus der ersten MIMO-Schaltungsanordnung entspricht, und/oder N2 Bandpassfilter (313b), die zwischen der zweiten MIMO-Schaltungsanordnung und dem zweiten Schaltkreis geschaltet sind und eine Bandbreite aufweisen, die im Wesentlichen dem zweiten Unterband zur Filtrierung der MIMO-Signale zu oder aus der zweiten MIMO-Schaltungsanordnung entspricht.

8. Endgerät nach Anspruch 7, **dadurch gekennzeichnet, dass** die Schaltvorrichtung (30) ferner Verstärkungsmittel (310a, 310b) aufweist, die zwischen der ersten und der zweiten MIMO-Schaltungsanordnung und dem ersten und dem zweiten Schaltkreis geschaltet sind, um die MIMO-Signale aus der ersten und der zweiten MIMO-Schaltungsanordnung zu verstärken.

9. Endgerät nach Anspruch 7 oder 8, **dadurch gekennzeichnet, dass** die Schaltvorrichtung (30) ferner Verstärkungsmittel (311a, 311b) aufweist, die zwischen der ersten und der zweiten MIMO-Schaltungsanordnung und dem ersten und dem zweiten Schaltkreis geschaltet sind, um die MIMO-Signale aus dem ersten und dem zweiten Schaltkreis zu verstärken.

10. Endgerät nach einem beliebigen der vorhergehenden Ansprüche, **dadurch gekennzeichnet, dass** es sich bei den Antennen (40) um Richtantennen handelt, die jeweils einen eigenen Winkelsektor abdecken, wobei die M Antennen zusammen vorzugsweise einen Winkelsektor von 360° abdecken.

**Claims**

1. Wireless communication terminal arranged to transmit and/or receive signals simultaneously in a predetermined band of frequencies, comprising:

   - a MIMO device (20) arranged to generate N MIMO signals in said predetermined frequency band from n baseband signals or to generate n baseband signals from N MIMO signals in said predetermined frequency band, with $N>n\geq2$;
   - M antennas (40) for receiving and/or transmitting the N MIMO signals, with $M\geq N/2$; and
   - a switching device (30) for connecting the MIMO device to the M antennas, **characterised in that** the MIMO device comprises a first MIMO circuit (20a) arranged to generate, from a baseband signal, N1 MIMO signals in a first sub-band of said predetermined frequency band or to generate, from N1 MIMO signals in said first sub-band, a baseband signal, and a second MIMO circuit (20b) arranged to generate, from a baseband signal, N2 MIMO signals in a second sub-band of said predetermined frequency band or to generate, from N2 MIMO signals in said first sub-band, a baseband signal, with N1+N2=N, said first and second sub-bands being non-overlapping,

and in that the switching device (30) comprises a first and a second channel adapted to connect said first and second MIMO circuits (20a, 20b) to the antennas (40) in such a way that each of said M antennas is able to receive or transmit one of the N1 MIMO signals of the first MIMO circuit and to receive or transmit one of the N2 MIMO signals of the second MIMO circuit simultaneously and further comprises a filtering device (34) associated with each antenna comprising a first and a second channel in order to isolate the MIMO signal of the first sub-band from the MIMO signal of the second sub-band both received or transmitted by said antenna.

2. Terminal according to claim 1, **characterised in that** the predetermined frequency band corresponds to the 5 GHz WiFi band.

3. Terminal according to claim 2, **characterised in that** the first sub-band is the band [4.9 GHz, 5.35 GHz] and the second sub-band is the band [5.47 GHz, 5.875 GHz].

4. Terminal according to any one of the preceding claims, **characterised in that** the antennas (40) are single access antennas and the filtering device (34) associated with each antenna is a diplexer.

5. Terminal according to any one of the preceding claims, **characterised in that** the switching device (30) comprises first and second switching circuits (32a, 32b) in order to connect respectively the first and second MIMO circuits (20a, 20b) to the filtering device associated with each antenna.

6. Terminal according to claim 5, **characterised in that** the switching device (30) further comprises a front-end module (33a, 33b) mounted between said first and second switching circuits and the filtering device associated with each antenna in order to amplify the MIMO signals from the antennas and/or the MIMO signals from the first and second MIMO circuits.

7. Terminal according to claims 5 or 6, **characterised in that** the switching circuit (30) further comprises N1 band-pass filters (313a), mounted between the first MIMO circuit and the first switching circuit, each having a bandwidth substantially corresponding to the first sub-band in order to filter MIMO signals intended for or coming from the first MIMO circuit and/or N2 band-pass filters (313b), mounted between the second MIMO circuit and the second switching circuit, having a bandwidth substantially corresponding to the second sub-band in order to filter the MIMO signals intended for or coming from the second MIMO circuit.

8. Terminal according to claim 7, **characterised in that** the switching device (30) further comprises amplification means (310a, 310b) mounted between the first and second MIMO circuits and the first and second switching circuits to amplify the MIMO signals coming from the first and second MIMO circuits.

9. Terminal according to claim 7 or 8, **characterised in that** the switching device (30) further comprises amplification means (311 a, 311 b) mounted between the first and second MIMO circuits and the first and second switching circuits to amplify the MIMO signals coming from the first and second switching circuits.

10. Terminal according to any one of the preceding claims, **characterised in that** the antennas (40) are directive antennas each covering a specific angular sector, the M antennas together covering preferably a 360° angular sector.

FIG.1

EP 2 673 888 B1

FIG.2

FIG.3

EP 2 673 888 B1

**EP 2 673 888 B1**

## RÉFÉRENCES CITÉES DANS LA DESCRIPTION

### Documents brevets cités dans la description

- FR 2911739

- US 20100166098 A